Europäisches Patentamt

European Patent Office

Office européen des brevets

(11) Publication number: **0 281 714**
**A2**

## EUROPEAN PATENT APPLICATION

(21) Application number: 87311384.9

(22) Date of filing: 23.12.87

(51) Int. Cl.⁴: **A47J 42/04** , A47J 42/10

(30) Priority: 13.03.87 JP 36834/87

(43) Date of publication of application:
14.09.88 Bulletin 88/37

(84) Designated Contracting States:
DE FR GB IT

(71) Applicant: YUGEN KAISHA HAMAZAKI HOSO
13-11 Ohkawa Kanazawa-ku
Yokohama-shi Kanagawa-ken(JP)

(72) Inventor: Usuki, Akira
4-1-1, Shonan Takatori
Yokosuka-shi Kanagawa-ken(JP)

(74) Representative: Purvis, William Michael
Cameron et al
D. Young & Co. 10 Staple Inn
London WC1V 7RD(GB)

(54) Container with a built-in mill.

(57) A container with a built-in mill wherein articles such as pre-roasted coffee beans can be stored ready to be ground to powder as required, has a conical guide (7), a partition wall (13) eccentrically erected on the conical guide (7), teeth (9, 10) provided below the guide (7), a partition plate (14) provided above the partition wall (13), an aperture (16) in the partition plate (14) and opening into a chamber defined by the partition wall (13) and an agitating member (17) mounted above the partition plate (14) and to cause coffee beans to pass through the aperture (16) to enter the chamber and be ground by the teeth (9, 10).

Fig.3

## CONTAINER WITH A BUILT-IN MILL

The invention relates to a container with a built-in mill wherein, for example, granular material, such as coffee beans which have already been roasted, can be contained and can be ground to powder in the mill when required.

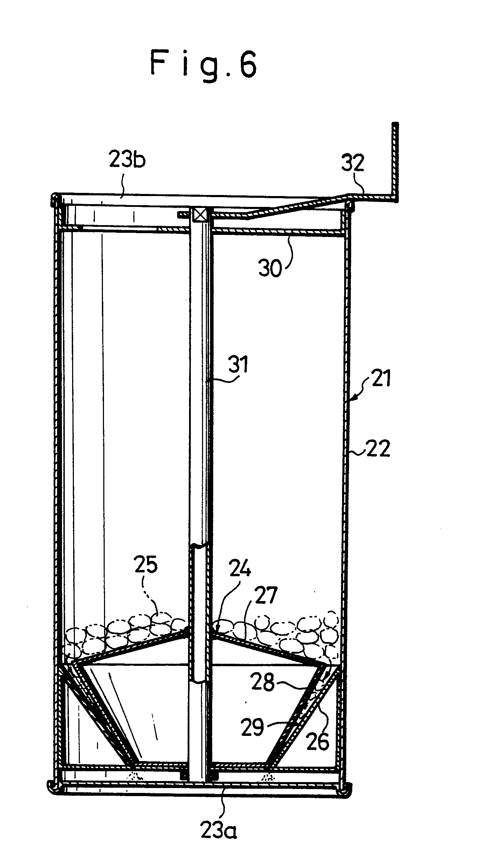

A container with a built-in mill in a container body and which is portable while containing grains such as coffee beans has been previously proposed and is shown in Figure 6 of the accompanying drawings. As shown in Figure 6, a cylindrical container 21 has a can body 22, a removable bottom lid 23a sealing the lower part of the can body 22, a mill 24 contained within the can body 22 on top of which material to be ground such as coffee beans 25 can be stored, and a lid 23b to close the upper part of the can body 22.

The mill 24 comprises an inwardly and downwardly tapering outer wall 26 held by the inner wall of the can body 22 and a rotor 27 rotatably mounted within the wall 26. A plurality of teeth are formed on the inner periphery of the outer wall 26 and the outer periphery of the rotor 27 is formed as a conical surface 28 opposed to the inner periphery of the outer wall 26 and having teeth formed thereon.

A gap 29 between the inner periphery of the outer wall 26 and the outer periphery of the rotor 27 narrows in a downward direction and the upper and lower ends of the gap 29 opened respectively within and outside the can body 22.

A rotatable rod 31 is connected to the rotor 27, passes through a supporting member 30 in the upper part of the can body 22 and is connected to a removable handle 32.

When material is to be ground, for example the coffee beans 25 are to be ground to powder to make a coffee drink, the upper and lower lids 23b and 23a are removed and the handle 32 is inserted in the upper part of the rod 31 and is rotated. The rotor 27 will rotate in the same direction and coffee beans dropping into the gap 29 will be rubbed between the outer wall 26 and the teeth provided on the conical surface 28.

However, in such a construction there is the disadvantage that, when the material, such as the coffee beans 25 is light in weight and slippery on its outer surfaces, it may not enter the gap 29 but will merely be agitated above the rotor 27 and will not be ground to powder.

Further, the size of the beans 25 is likely to vary between large and small. There is then also the disadvantage that, if the coffee beans are too large, when the rotor 27 is rotated, the coffee beans will not enter the gap 29 and will not be ground to powder.

The gap 29 can be made large at the upper opening end so that the coffee beans will easily enter the gap 29 but this may require the rotor 27 to be unduly long.

If the rotor 27 is made unduly long the content of the coffee beans in the can body 22 will have to be reduced or, to maintain the same content of coffee beans in the can body 22, the container must be made extra-long or extra-large as a whole.

According to the invention there is provided a container with a built-in mill in a hollow container body characterized in that the mill comprises a conical guide provided in a lower part of the container body, a cylindrical wall depending from the edge of an aperture in the conical guide, first teeth provided on the inner periphery of the cylindrical wall, second teeth rotatable within the cylindrical wall and meshing with the first teeth, a rod connected to the second teeth, a cylindrical partition wall eccentrically erected on the conical guide, a horizontal partition plate provided above the partition wall and having an aperture therein opening into a chamber defined by the partition wall and an agitating member connected to the rod and rotatable over the partition plate.

In such a container with a build-in mill, coffee beans or like articles can easily be ground to powder even though the weight and size of the articles varies.

The coffee beans or like articles can be forcibly pushed onto the teeth of the mill and be ground thereby.

When the rod is rotated, the agitating member connected to the rod will also simultaneously rotate in the same direction and coffee beans or like articles stored in the container body will be led to the aperture in the partition plate.

Preferably the aperture in the partition plate opens in a large diameter side chamber of the chamber sectioned by the partition wall, and the coffee beams or like articles contained in the body will be led through the aperture into the large diameter side chamber of the chamber sectioned by the partition wall and then will be led to a small diameter side thereof.

When the chamber has been filled with coffee beans or like articles they will have nowhere else to go except to be forcibly pushed inbetween and ground between the first teeth and the second teeth.

The invention is diagrammatically illustrated by way of example in the accompanying drawings, in which:-

Figure 1 is a perspective view of a container with a built-in mill according to the invention;

Figure 2 is a perspective view of the container of Figure 1 disassembled;

Figure 3 is a sectional elevation, to a large scale, of the container of Figures 1 and 2 in its operating condition;

Figure 4 is a sectional plan view taken on line A-A of Figure 3;

Figure 5 is a perspective view to a large scale of a mill mounted within the container of Figures 1 to 4; and

Figure 6 is a sectional elevation of a container with a built-in mill of previously proposed kind.

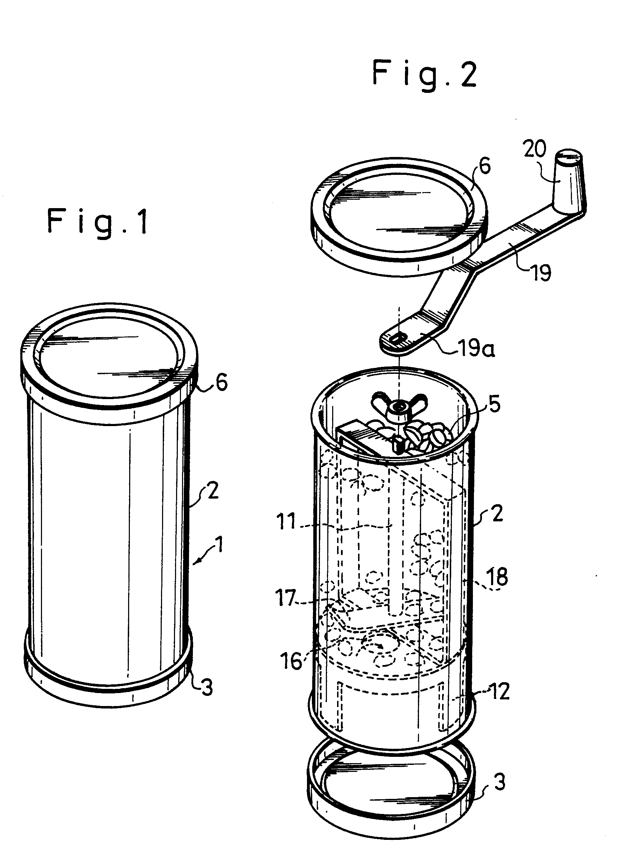

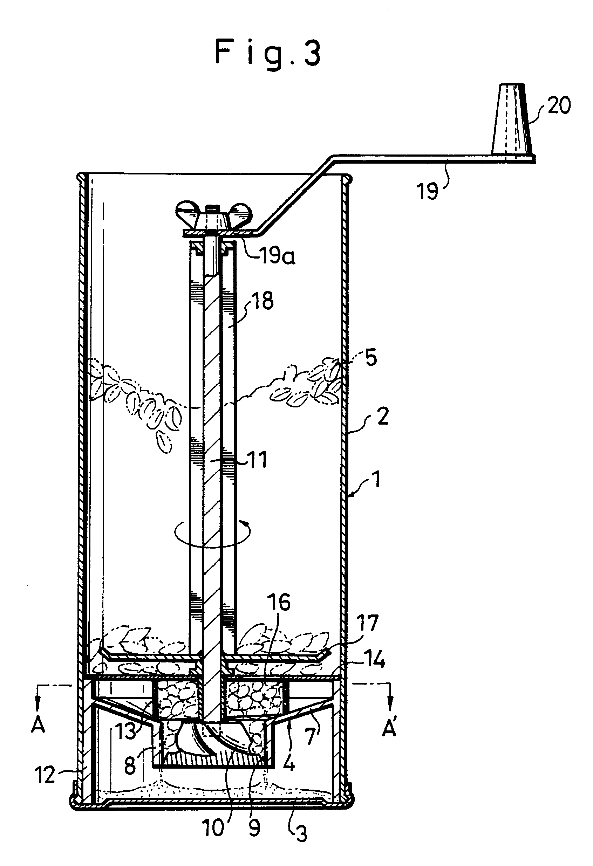

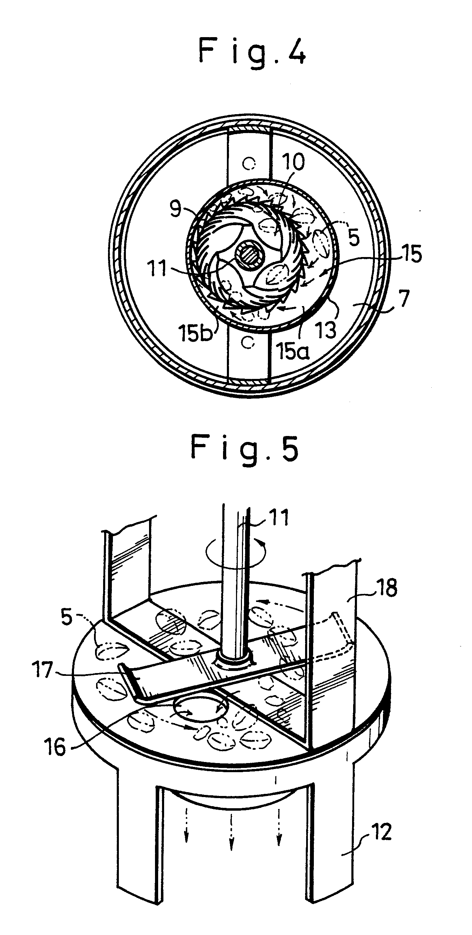

Referring to Figures 1 to 5, a container 1 with a built-in mill has a cylindrical can body 2, a lid 3 sealing the lower part of the can body 2 and a mill 4 mounted within the can body 2. After articles such as coffee beans 5 are loaded into the container, the upper end of the can body 2 can be sealed by a lid 6.

The mill 4 mounted in the can body 2 comprises a conical guide 7 provided in the lower part of the can body 2, a cylindrical wall 8 depending from the edge of an aperture in the conical guide 7, first teeth 9 which are many in number and comprise projections such as spirals formed on the inner periphery of the cylindrical wall 8, and second teeth 10 mounted on a rod 11 so as to be rotatable within the cylindrical wall 8 and oppose the first teeth 9.

The conical guide 7 is supported on legs 12. A cylindrical partition wall 13 extends eccentrically upwards from the conical guide 7 and a horizontal partition plate 14 is provided at the upper end of the partition wall 13. An aperture 16 in the partition plate 14 opens into the wide side 15a of a chamber 15 defined by the partition wall 13.

An agitating member, as shown a diametrally extending plate 17, is secured on the rod 11 and is rotatable mounted above the partition plate 14.

The rod 11 is supported by a supporting frame 18 and a horizontal base end 19a of a handle 19 can be removably engaged on the upper end of the rod 11. The handle 19 has a middle portion thereof inclined upward so that a knob 20 extends outside the can body 2.

The handle 19 can be contained in the can body 2 when it is not in use and can be taken out and connected to the rod 11 when it is to be used.

When a drink of coffee is to be prepared, the handle 19 is connected to the rod 11 and is rotated. The agitating member 17 connected to the rod 11 will rotate and the coffee beans contained in the can body 2 will be moved in turn toward the aperture 16 by the agitating member 17 and will be pushed in turn through the aperture 16 into the large diameter side chamber 15a of the chamber 15 defined by the partition wall 13.

The coffee beans thus dropped into the wide side 15a of the chamber 15 will be agitated by the upper parts of the second teeth 10 and will be moved in turn into a narrow side 15b of the chamber 15. When the chamber 15 has been filled with the coffee beans 5, the coffee beans 5 will be forcibly pushed between and ground between the first teeth 9 and the second teeth 10.

The container 1 can, if desired, be used for grinding other articles such as soy beans, red beans and corns contained in the can body 2.

In the container 1:

(1) Coffee beans or like articles can easily be ground to powder irrespective of their weight and size.

(2) Since the cylindrical partition wall is eccentrically erected on the conical guide, coffee beans or like articles dropped into the chamber 15 defined by the partition wall will be forcibly pushed into the gap between an positively ground between the first and second teeth.

(3) A determined content of articles such as coffee beans can be contained without making the container body unduly long or large or difficult to carry.

## Claims

1. A container with a built-in mill in a container body characterized in that the mill comprises a conical guide (7) provided in a lower part of the container body (2), a cylindrical wall (8) depending from the edges of an aperture in the conical guide (7), first teeth (9) provided on the inner periphery of the cylindrical wall (8), second teeth (10) rotatable within the cylindrical wall and meshing with the first teeth (9), a rod (11) connected to the second teeth (10), a cylindrical partition wall (13) eccentrically erected on the conical guide (7), a horizontal partition plate (14) provided above the partition wall (13) and having an aperture (16) therein opening into a chamber defined by the partition wall (13) and an agitating member (17) connected to the rod (11) and rotatable over the partition plate (14).

2. A container with a built-in mill according to claim 1, wherein a handle (19) is removably connected to the rod (11).

3. A container with a built-in mill according to claim 1, wherein the rod (11) can be rotated from outside the container (1).

4. A container with a built-in mill according to any one of claims 1 to 3, wherein the aperture (16) in the partition plate (14) opens into a wide side (15a) of the chamber (15) defined by the partition wall (13).

# Fig.2

# Fig.1

# Fig.3

# Fig.4

# Fig.5

# Fig.6